# FASCICULE DE BREVET EUROPEEN

(11) **EP 1 517 035 B1**
(45) Date de publication et mention de la délivrance du brevet: **19.04.2006**
(21) Numéro de dépôt: 04291694.0
(22) Date de dépôt: 05.07.2004
(51) Int. Cl.: F03G 7/06, F16K 31/00, G05D 23/02

(54) **Vérin thermique.**
Thermischer Stellantrieb
Thermal actuator

(30) Priorité: 18.09.2003 FR 0310978
(43) Date de publication de la demande: 23.03.2005
(73) Titulaire: DAUPHINOISE THOMSON SAS, 38035 Grenoble (FR)
(72) Inventeur: Andre, Patrick, 38170 Seyssinet (FR)
(74) Mandataire: Dossmann, Gérard

(56) Documents cités:
- DE-A- 2 448 065
- DE-A- 10 104 690
- DE-B- 1 141 804
- GB-A- 2 374 143
- US-A- 3 793 837

## Description

La présente invention concerne le domaine des vérins thermiques qui comprennent une coupelle, un couvercle fermant cette coupelle et présentant un passage traversant de guidage, un joint dont le bord périphérique est pris entre la coupelle et le couvercle et qui délimite dans la coupelle une chambre opposée au couvercle et remplie d'un produit dilatable, ainsi qu'une tige qui s'étend au travers dudit passage traversant du couvercle et qui coopère avec ledit joint, de telle sorte que des variations de volume du produit dilatable, sous l'effet de variations de température, produisent des déplacements longitudinaux de ladite tige dans un sens ou dans l'autre.

De tels vérins thermiques sont utilisés en particulier pour actionner et réguler des clapets, des vannes, des volets, en particulier dans le domaine de l'automobile ou des appareils de chauffage ou de régulation thermique.

Actuellement, la tige des vérins est constituée par un barreau cylindrique sans aspérités, ajusté dans le passage traversant du couvercle afin d'obtenir un guidage longitudinal parfait (cf. GB 2 374 143 A). De plus, compte tenu des conditions environnantes d'utilisation de tels vérins, la tige est en acier inoxydable.

La présente invention vise à améliorer les vérins thermiques existants.

Selon la présente invention, ladite tige présente au moins une partie radialement en saillie formée sur sa partie située intérieurement au-delà du passage traversant de guidage dudit couvercle, constituant une butée susceptible de venir coopérer avec le couvercle pour empêcher cette tige d'être extraite à l'extérieur dudit passage traversant.

Selon la présente invention, ladite partie en saillie de ladite tige est de préférence annulaire.

Selon une variante d'exécution de la présente invention, ledit joint présente une partie en forme de doigt de gant ouvert du côté du passage traversant du couvercle, ladite tige présentant une partie d'extrémité qui est engagée dans ce doigt de gant et qui présente ladite partie en saillie.

Selon la présente invention, ladite partie en saillie présente de préférence exclusivement des formes arrondies.

Selon la présente invention, ladite tige et ledit passage traversant de guidage dudit couvercle sont de préférence de sections circulaires, ladite partie en saillie s'étendant de préférence radialement au-delà du bord de ce passage traversant.

La présente invention sera mieux comprise à l'étude d'un vérin thermique décrit à titre d'exemple non limitatif et illustré par le dessin sur lequel :
- la figure 1 représente une coupe longitudinale d'un vérin thermique selon la présente invention ;
- la figure 2 représente une coupe longitudinale agrandie d'une partie intérieure dudit vérin ;
- et les figures 3 et 4 représentent une variante d'exécution de cette partie dudit vérin.

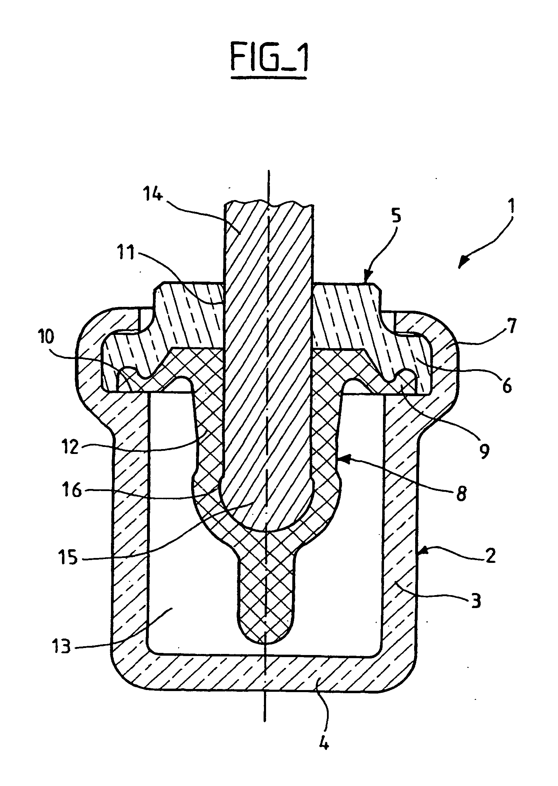

En se reportant à la figure 1, on peut voir qu'on a représenté un vérin thermique 1 qui comprend une coupelle 2 qui présente une partie cylindrique 3 et une partie radiale arrière 4, un couvercle radial avant 5 dont la périphérie 6 est prise par sertissage dans une partie annulaire avant 7 de la coupelle 2, et un joint d'étanchéité 8 dont la partie périphérique 9 est pincée lors dudit sertissage entre une partie arrière de la partie périphérique 6 du couvercle 5 et un épaulement radial annulaire avant 10 de la coupelle 2.

Le couvercle 5 présente un passage axial traversant de guidage 11 et le joint 8 présente une partie 12 en forme de doigt de gant souple qui est ouverte du côté du passage 11 de telle sorte que le joint 8 délimite dans la coupelle 2 une chambre 13 opposée au couvercle 5 et remplie d'un produit dilatable tel que de la cire.

Le vérin 1 présente en outre une tige longitudinale cylindrique 14 qui s'étend au travers du passage 11 du couvercle 5, dans lequel elle est guidée longitudinalement, cette tige étant engagée dans le doigt de gant 12 du joint 8 dont l'intérieur est lubrifié.

Ainsi, les variations de volume du produit dilatable contenu dans la chambre 13, dûes à des variations de température, produisent des déplacements longitudinaux de la tige 14 par rapport à la coupelle 3 et au couvercle 5, en engendrant des glissements de la tige 14 dans le doigt de gant 12 qui enveloppe et reste en contact avec sa partie s'étendant en arrière du passage traversant de guidage 11, la tige 14 sortant sous l'effet de la dilatation du produit dilatable et rentrant sous l'effet d'un organe de rappel extérieur.

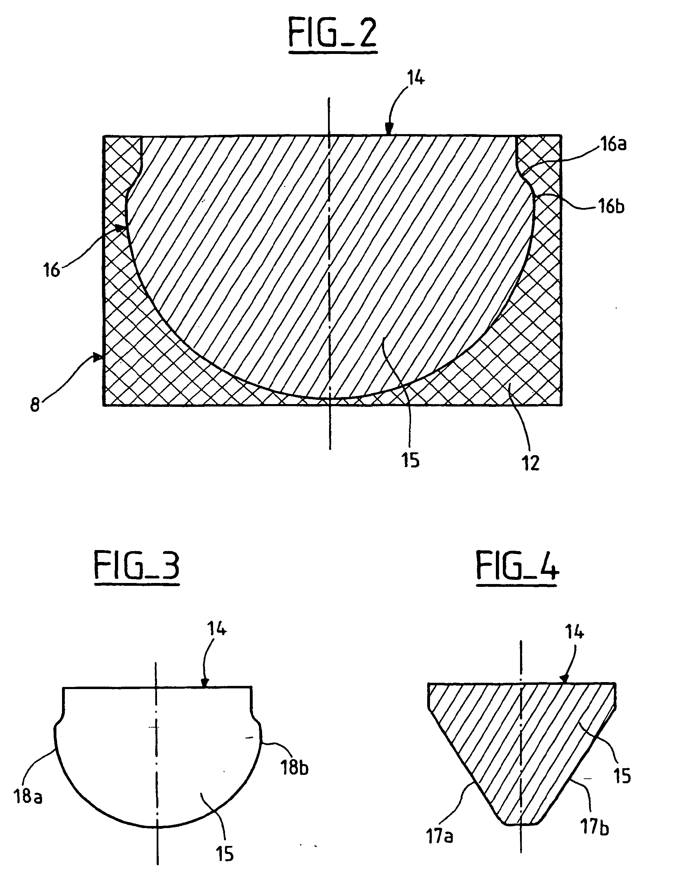

Comme le montrent la figure 1 et plus précisément la figure 2, la partie d'extrémité arrière 15 de la tige longitudinale 14 présente une partie annulaire en saillie 16 dont le diamètre le plus grand est supérieur au diamètre du passage traversant de guidage 11, de telle sorte que cette partie annulaire en saillie 16 est susceptible de venir coopérer avec la face arrière du couvercle 5, autour du passage traversant 11, pour empêcher l'extraction vers l'avant de la tige 14 à l'extérieur du passage traversant 11.

La partie annulaire en saillie 16 de la tige 14 présente exclusivement des formes arrondies qui comprennent, d'avant en arrière, une partie concave 16a suivie d'une partie convexe 16b qui rejoint une face d'extrémité arrière 16c de la tige 12 de forme sensiblement hémisphérique.

Ainsi, lorsque la tige 14 se déplace longitudinalement dans et en contact avec le doigt de gant 12, ce dernier 12 ne rencontre aucune arête qui serait susceptible de l'endommager.

Dans une variante, la tige 14, généralement en acier inoxydable, peut être fabriquée par tournage, puis traitée avec d'autres par brassage avec un abrasif afin de supprimer toutes aspérités qui pourraient nuire à son glissement dans le passage traversant 11 du couvercle 5 et à son glissement dans le doigt de gant 15.

En se reportant aux figures 3 et 4, on peut voir qu'on a représenté une variante d'exécution de la partie d'extrémité arrière 15 de la tige 14, selon laquelle cette partie d'extrémité est matricée de façon à former deux pans opposés 17a et 17b formant un V et qui, par refoulement de matière, permet la formation de parties opposées en saillie 18a et 18b dont les profils longitudinaux s'apparentent au profil longitudinal de la partie annulaire en saillie 16 de l'exemple précédent.

Dans ce cas aussi, la tige 14 peut être traitée avec d'autres par brassage avec un abrasif.

Il résulte de ce qui précède que la tige longitudinale 14, tout en ayant les qualités requises pour un bon fonctionnemnt du vérin 1, ne peut pas s'extraire du passage tranversant 11 du couvercle 5 lors de manipulations du vérin 1, principalement lors des opérations de montage de ce dernier dans un appareillage.

La présente invention ne se limite pas à l'exemple ci-dessus décrit.

En particulier, la partie arrière de la tige longitudinale pourrait s'étendre dans un évidemment arrière du couvercle prolongeant le passage traversant de guidage, le joint coopérant avec la face arrière de la tige par l'intermédiaire d'une bague coulissant dans cet évidemment. Dans ce cas, la tige présenterait une partie en saillie susceptible de venir en appui contre un épaulement de transition entre le passage traversant de guidage et ledit évidemment du couvercle.

Bien d'autres variantes de réalisation sont possibles sans sortir du cadre défini par les revendications annexées.

## Revendications

1. Vérin thermique comprenant une coupelle, un couvercle fermant cette coupelle et présentant un passage traversant de guidage, un joint dont le bord périphérique est pris entre la coupelle et le couvercle et qui délimite dans ladite coupelle une chambre opposée audit couvercle et remplie d'un produit dilatable, ainsi qu'une tige qui s'étend au travers du passage traversant du couvercle et qui coopère avec ledit joint, **caractérisé par le fait que** ladite tige (14) présente au moins une partie radialement en saillie (16) formée sur sa partie située intérieurement au-delà du passage traversant de guidage (11) dudit couvercle, constituant une butée susceptible de venir coopérer avec le couvercle pour empêcher cette tige d'être extrait à l'extérieur dudit passage traversant.

2. Vérin selon la revendication 1, **caractérisé par le fait que** ladite partie en saillie (16) de ladite tige est annulaire.

3. Vérin selon l'une des revendications 1 et 2, **caractérisé par le fait que** ledit joint (8) présente une partie en forme de doigt de gant (12) ouvert du côté du passage traversant du couvercle, ladite tige présentant une partie d'extrémité (15) qui est engagée dans ce doigt de gant et qui présente ladite partie en saillie (16).

4. Vérin selon l'une quelconque des revendications précédentes, **caractérisé par le fait que** ladite partie en saillie (16) présente exclusivement des formes arrondies.

5. Vérin selon l'une quelconque des revendications précédentes, **caractérisé par le fait que** ladite tige (14) et ledit passage traversant de guidage (11) dudit couvercle sont de sections circulaires, ladite partie en saillie (16) s'étendant radialement au-delà du bord de ce passage traversant.

## Patentansprüche

1. Thermischer Stellantrieb mit einer Schale, einem diese Schale schließenden Deckel, der einen Führungsdurchgang aufweist, einer Dichtung, deren Umfangsrand zwischen der Schale und dem Deckel in Eingriff genommen ist und in der Schale eine dem Deckel gegenüberliegende Kammer begrenzt, die mit einem ausdehnbaren Produkt gefüllt ist, sowie einer Stange, die sich durch den Durchgang des Deckels erstreckt und mit der Dichtung zusammenwirkt, **dadurch gekennzeichnet, dass** die Stange (14) mindestens einen radial vorragenden Teil (16) aufweist, der an ihrem sich innen jenseits des Führungsdurchgangs (11) des Deckels befindenden Teil ausgebildet ist und einen Anschlag bildet, der mit dem Deckel dahingehend zusammenwirken kann, zu verhindern, dass diese Stange aus dem Durchgang herausgezogen wird.

2. Stellantrieb nach Anspruch 1, **dadurch gekennzeichnet, dass** der vorragende Teil (16) der Stange ringförmig ist.

3. Stellantrieb nach Anspruch 1 oder 2, **dadurch gekennzeichnet, dass** die Dichtung (8) einen handschuhfingerförmigen Teil (12) aufweist, der auf der Seite des Durchgangs des Deckels offen ist, wobei die Stange einen Endteil (15) aufweist, der in diesem Handschuhfinger in Eingriff steht und den vorragenden Teil (16) aufweist.

4. Stellantrieb nach einem der vorhergehenden Ansprüche, **dadurch gekennzeichnet, dass** der vorragende Teil (16) ausschließlich abgerundete Formen aufweist.

5. Stellantrieb nach einem der vorhergehenden Ansprüche, **dadurch gekennzeichnet, dass** die Stange (14) und der Führungsdurchgang (11) des Deckels einen kreisförmigen Querschnitt aufweisen, wobei sich der vorragende Teil (16) radial über den Rand dieses Durchgangskanal hinaus erstreckt.

## Claims

1. Thermal actuator comprising a cup, a lid closing this cup and exhibiting a guide through-passage, a seal, the peripheral edge of which is sandwiched between the cup and the lid and which within the said cup delimits a chamber on the opposite side to the said lid and filled with an expandable product, and a rod which extends through the through-passage in the lid and collaborates with the said seal, **characterized in that** the said rod (14) has at least one radially projecting part (16) formed on its part situated internally beyond the guide through-passage (11) in the said lid, constituting a limit stop able to collaborate with the lid to prevent this rod from being extracted from the said through-passage.

2. Actuator according to Claim 1, **characterized in that** the said projecting part (16) of the said rod is annular.

3. Actuator according to one of Claims 1 and 2, **characterized in that** the said seal (8) has a thimble-shaped part (12) open on the side of the through-passage in the lid, the said rod exhibiting an end part (15) which is engaged in this thimble and exhibits the said projecting part (16).

4. Actuator according to any one of the preceding claims, **characterized in that** the said projecting part (16) exhibits exclusively rounded shapes.

5. Actuator according to any one of the preceding claims, **characterized in that** the said rod (14) and the said guide through-passage (11) in the said lid are of circular cross sections, the said projecting part (16) extending radially beyond the edge of this through-passage.
